# EUROPEAN PATENT APPLICATION

(11) **EP 1 202 157 A2**
(43) Date of publication of application: **02.05.2002**
(21) Application number: 01309142.6
(22) Date of filing: 29.10.2001
(51) Int. Cl.: G06F 3/033

(54) **Electronic equipment and pointer display method**

(30) Priority: 27.10.2000 JP 2000328452; 26.06.2001 JP 2001193366
(71) Applicant: Sony Computer Entertainment Inc., Tokyo 107-0052 (JP)
(72) Inventor: Nakamura, Tadashi, Sony Computer Entertainment Inc, Tokyo 107-0052 (JP)
(74) Representative: Turner, James Arthur

(57) **Abstract**

The present invention provides a GUI which can be manipulated with a feeling which approximates a manipulation in a real space. An input receiving part 21a receives an instruction from a pointing device 1a while an input receiving part 21b receives an instruction from a pointing device 1b. A pointer control part 22 decides the display positions of a pointer corresponding to the pointing device 1a and a pointer corresponding to the pointing device 1b displayed on a display device 3, and transmits instructions to a display control part 24. Further, an application (AP) 23 performs a given processing in accordance with instructions from the pointing devices 1a, 1b.

## Description

### BACKGROUND OF THE INVENTION

The present invention relates to a man-machine interface technique, and more particularly to a graphical user interface which makes use of a plurality of pointing devices.

In a man-machine interface of a computer system, the GUI (Graphical User Interface) which makes use of a pointing device has been widely used. In the general GUI, windows, various kinds of objects and a pointer which corresponds to the pointing device and the like are displayed on a screen and inputs are received from the pointing device manipulated by a user.

Recently, along with the progress of the improvement of the user interface in the computer system, various ideas have been proposed to enable a manipulation with a feeling close to the real world even in the GUI. For example, at the time of deleting unnecessary files, drugging and dropping of these files into an icon indicating a litter bin is performed as if litters are actually thrown into a litter bin in a real space.

However, in spite of the fact that an environment very close to the real space is realized in the virtual space on the computer in the above-mentioned manner, the number of pointing device that the user uses is usually only one. Accordingly, the feeling of the user, even with respect to a work which the user uses both hands to handle in the real space, becomes the feeling of performing the work with a single hand when the pointing device is used on the GUI and hence, the user receives the cumbersome feeling.

Accordingly, embodiments of the present invention can provide a technique on GUI which ensures a manipulation with a feeling close to a feeling at the time of performing the manipulation in a real space.

Various respective aspects and features of the invention are defined in the appended claims. Features from the dependent claims may be combined with features of the independent claims as appropriate and not merely as explicitly set out in the claims.

The following processing is performed according to an embodiment of the present invention. That is, a first input signal is received from a first pointing device and a display position of a first pointer which is displayed on a display device is determined based on the first input signal. A second input signal is received from a second pointing device and a display position of a second pointer which is displayed on the display device is determined based on the second input signal.

The invention will now be described by way of example with reference to the accompanying drawings, throughout which like parts are referred to by like references, and in which:
Fig. 1 is an explanatory view showing the whole constitution of a computer system to which a mode for carrying out the present invention is applied.
Fig. 2 is an explanatory view showing an example of a first manipulation of the present invention.
Fig. 3 is an explanatory view showing an example of a second manipulation of the present invention.
Fig. 4 is an explanatory view showing an example of a third manipulation of the present invention.
Figs. 5A to 5B are explanatory views showing an example of a fourth manipulation of the present invention.
Figs. 6A to 6C are explanatory views showing an example of a fifth manipulation of the present invention.
Fig. 7 is an explanatory view showing an example of a sixth manipulation of the present invention.
Fig. 8 is an explanatory view showing an example of a seventh manipulation of the present invention.

Embodiments to which the present invention is applied are explained in conjunction with attached drawings hereinafter.

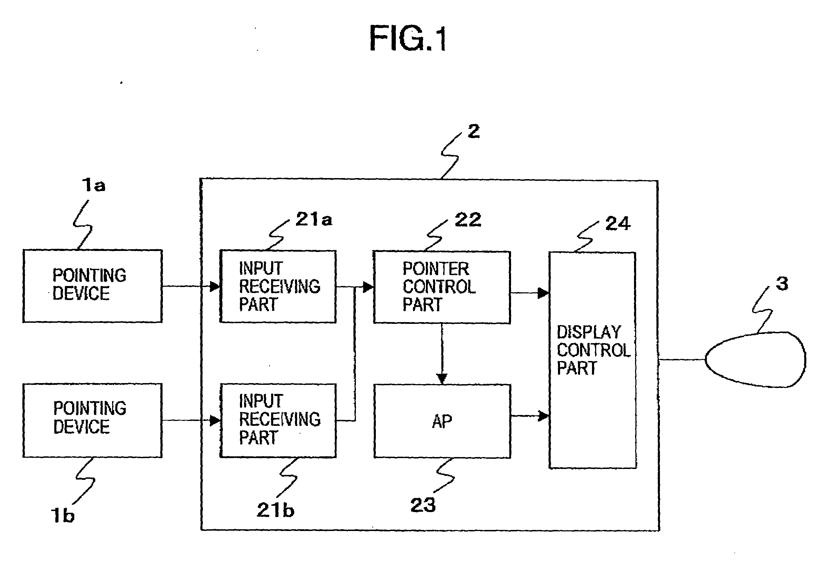

Fig. 1 shows a computer system according to this embodiment. This computer system includes pointing devices 1 (1a, 1b), an electronic equipment 2 and a display device 3. The electronic equipment 2 includes a connecting portion which connects the electronic equipment 2 with the pointing device 1a, a connecting portion which connects the electronic equipment 2 with the pointing device 1b, and a connecting portion which connects the electronic equipment 2 with the display device 3 respectively. These connecting portions are not shown in the drawing. The pointing devices 1a, 1b and the display device 3 are connected to corresponding connecting portions, respectively.

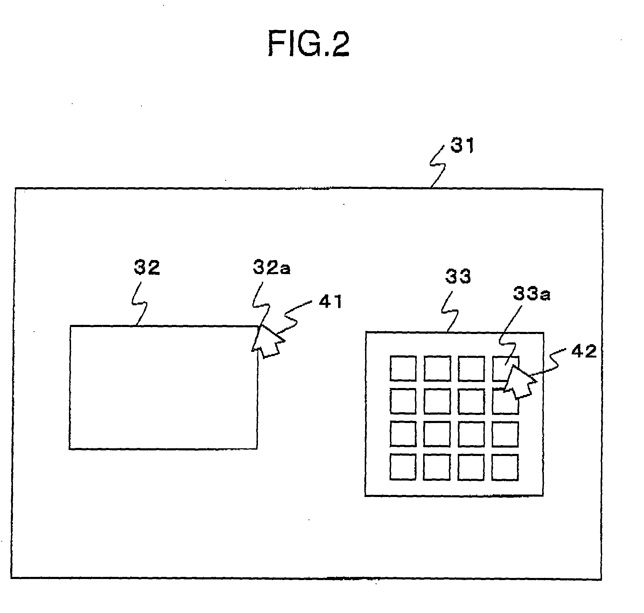

In this computer system, it becomes possible to provide a plurality of pointing devices 1. In this embodiment, two pointing devices (1a, 1b) are provided. A user of this system is capable of simultaneously manipulating respective pointing devices 1 using both hands, Each pointing device 1a, 1b includes a mechanism for receiving an input which is provided for displacing a pointer displayed on a display screen 31 (see Fig. 2) of the display device 3 and a button, although they are not shown in the drawing. The pointing device 1 may be, for example, a mouse or a track ball or the like.

The electronic equipment 2 includes a CPU (Central Processing Unit), a memory and the like not shown in the drawing, and realizes following functions by executing a computer program. That is, the electronic equipment 2 includes input receiving parts 21 (21a, 21b), a pointer control part 22, an application 23 and a display control part 24 as inner functions thereof.

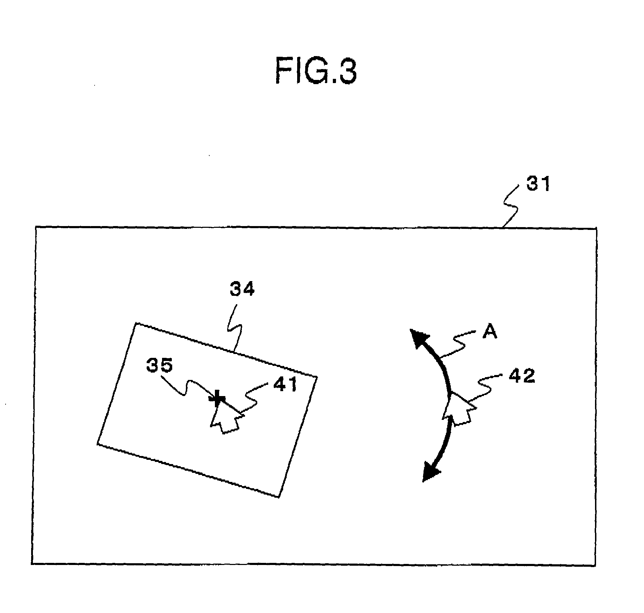

The input receiving parts 21 receive inputs from the pointing devices 1. In this embodiment, the input receiving parts 21 are comprised of two parts (21a, 21b). Respective input receiving parts (21a, 21b) are made to correspond to the pointing devices 1a, 1b. Respective input receiving parts 21a, 21b respectively receive inputs from respective pointing devices 1a, 1b. To be more specific, the input receiving parts 21 obtain the displacement information of pointers and the button manipulation information from the pointing devices 1 at a fixed period (for example, 1/60 second). The displacement information is, for example, comprised of information which indicates a relative displacement quantity on the display screen 31 (see Fig. 2 and Fig. 3) which constitutes a two-dimensional plane, while the button manipulation information is, for example, comprised of information which indicates whether the buttons of the pointing devices 1 are in the pushed state (ON) or in the non-pushed state (OFF).

Here, the number of the input receiving parts 21 is not always as same as the number of the pointing devices 1, For example, one input receiving part 21 may receive inputs from a plurality of pointing devices 1.

The pointer control part 22 obtains the displacement information and the button manipulation information which the input receiving parts 21 receive. The pointer control part 22 holds the positional information of pointers 41, 42 (see Fig. 2 and Fig. 3) which are displayed on the display screen 31. These positional information are, for example, respectively held in the form of XY coordinates on this plane respectively using the display screen 31 as a two dimensional X-Y plane. The pointer control part 22 calculates the XY coordinates of respective pointers after displacement based on the XY coordinates of the pointers 41, 42 and the displacement information. The calculated coordinates values after displacement are outputted to the display control part 24 as the positional information of the pointers 41, 42. Further, this positional information and the button manipulation information received from the input receiving parts 21 are outputted to the application 23.

The display control part 24 controls the display device 3 and displays an object or the like on the display screen 31. To be more specific, the display control part 24 receives the positional information of the pointers from the pointer control part 22 and displays the pointers 41, 42 at the designated positions. Further, upon receiving the drawing instruction from the application 23, the display control part 24 displays an instructed object or the like on the display screen 31.

The application 23 performs various processing. Considered here is the application 23 which executes a given processing based on the instructions from the pointing devices 1 and displays various graphics, texts and the like on the display screen 31 is considered. Hereinafter, a virtual object or the like which the application 23 displays on the display screen 31 is called "an object".

For example, a case in which the application 23 which manipulates the object on the display screen 31 as shown in Fig. 2 and Fig. 3 is considered. In Fig. 2, a virtual object 32, a color pallet 33 for selecting colors and the pointers 41, 42 are displayed on the display screen 31. In Fig. 3, a virtual object 34 and the pointers 41, 42 are displayed on the display screen 31. Here, the pointer 41 and the pointer 42 are respectively made to correspond to the manipulation of the pointing device 1a and the manipulation of the pointing device 1b.

The application 23, with respect to the objects such as the virtual objects 32, 34 and the color pallet 33 and the like on the display screen 31, holds information indicative of the kinds of objects, information indicative of the shapes of objects and the like and information indicative of the positions of the objects and the like respectively. Based on these information, the application 23 performs the drawing instruction of the objects to the display control part 24.

Further, the application 23 receives the positional information of the pointers 41, 42 and the button manipulation information from the pointer control part 22. Then, based on the positional information of the pointers 41, 42, the application 23 grasps the positional relationship with the objects which have been already displayed. That is, the application 23 judges whether the pointers 41, 42 are overlapped to the objects which have been already displayed or not and determines the position where the pointers 41, 42 are overlapped to the objects when the pointers 41, 42 are overlapped to the objects. Further, when the pointers 41, 42 are overlapped to the existing objects, the application 23 judges the presence or the absence of the instruction from the pointing devices 1 based on the button manipulation information, When the application 23 receives the instruction of the pointing devices 1, the application 23 performs a given processing.

For example, in the first manipulation example shown in Fig. 2, the virtual object 32 and the color pallet 33 are displayed on the display screen 31. The user moves the pointers 41, 42 to respective positions shown in the drawing by manipulating the pointing devices 1a, 1b. That is, the pointer 41 indicates a right upper portion 32a of the virtual object 32 and the pointer 42 indicates one color region 33a out of the color pallet 33.

Here, when the user pushes the button of the pointing device 1a, the application 23 is informed of the fact that the button of the pointing device 1a is pushed as the button manipulation information. Based on this instruction, the application 23 performs a given processing for selecting the virtual object 32 as a subject object.

Then, when the user pushes the button of the pointing device 1b, the button manipulation information, which implies the button of the pointing device 1b is pushed, is communicated to the application 23. Accordingly, the color of a region 33a which is indicated by the pointer 42 is specified out of the color pallet 33. As a result, the application 23 instructs the display control part 24 such that the color of the virtual object 32 which is the selected object is changed to the specified color (color which the region 33a indicates).

Further, in the example shown in Fig. 3, the virtual object 34 is displayed on the display screen 31. In response to the manipulation of the user, the application 23 performs the processing to rotate the virtual object 34 about a designated point which works as the center. Hereinafter, a manipulation example to perform this rotating manipulation is explained.

The user manipulates the pointing device 1a such that the pointer 41 indicates a point 35 inside the virtual object 34. Further, the user manipulates the pointing device 1b such that the pointer 42 indicates a point outside the virtual object 34.

Here, when the user pushes the button of the pointing device 1a, the button manipulation information, which implies the button of the pointing device 1a is pushed, is communicated to the application 23. Accordingly, the point 35 inside the virtual object 34 is determined as the central point of the rotary movement and the application 23 performs a given processing to determine the central point of the rotation.

Then, the user moves the pointing device 1b such that the pointing device 1b draws an arc while pushing the button of the pointing device 1b. Accordingly, the application 23 receives the button manipulation information on the pointing device 1b and the positional information of the pointer, Here, on the display screen 31, the pointer 42 moves along an arc-shaped arrow A. Accordingly, the application 23 instructs the display control part 24 such that the virtual object 34 is subjected to the rotary movement about the point 35 in response to the movement of the pointer 42.

With the provision of two pointing devices, the user can perform the manipulation of the object on the display screen 31 using both hands as described previously.

In the above-mentioned first and second manipulation examples, the application 23 does not differentiate the pointer 41 and the pointer 42 from each other. That is, the role of the pointer 41 and the role of the pointer 42 can be exchanged. Accordingly, the function which is performed by using the pointer 41 can be performed by the pointer 42, while the function which is performed by using the pointer 42 can be performed by using the pointer 41.

On the other hand, the application 23 may differentiate the pointers 41, 42 from each other. In this case, functions which respective pointers 41, 42 can perform are preliminarily allocated to respective pointers 41, 42. For example, one pointer functions as a pointer (the pointer 41 in the first and the second manipulation examples) which selects an object which becomes a subject or specifies a position which becomes the reference, while the other pointer functions as a pointer (the pointer 42 in the first and the second manipulation examples) which performs the instruction of the manipulation using the selected object or the specified position or the like as the reference.

Here, the pointer control part 22 outputs an identifier for identifying the pointer to the application 23 along with the positional information and the button manipulation information. In the application 23, the pointer from which the application 23 receives the instruction is preliminarily set for each processing. The application 23 performs the determination using the identifier of the pointer along with the positional information and the button manipulation information.

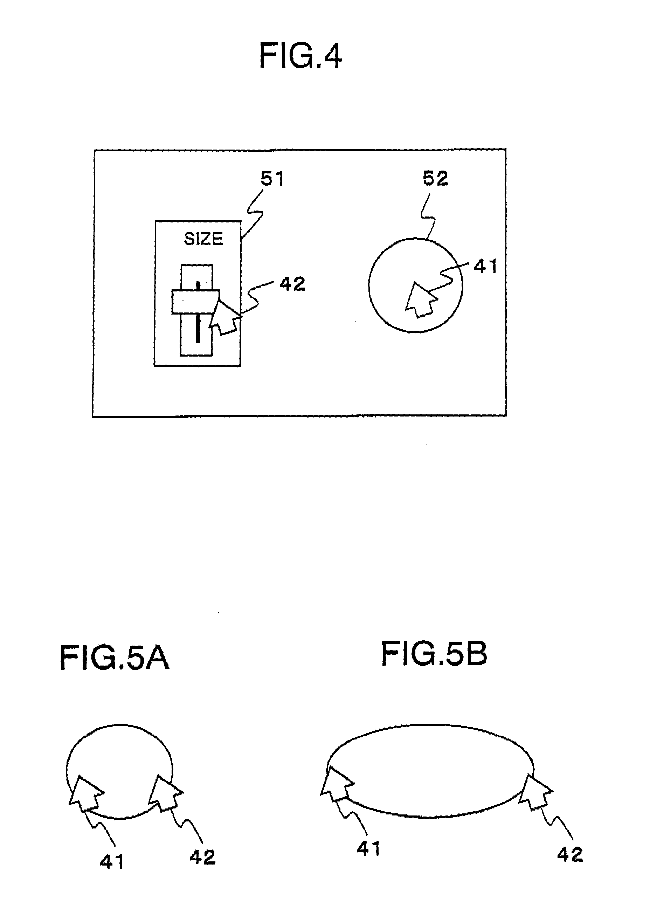

Further, the present invention is applicable to various manipulation example besides the above-mentioned manipulation examples. For example, such other manipulation examples are shown in Fig. 4 to Fig. 8.

The third manipulation example shown in Fig. 4 is an example which changes the size of an air brush in a painting tool. That is, the pointer 41 selects a location to which the air brush is sprayed. Here, a slide bar 51 is manipulated by using the pointer 42 so as to enlarge or shrink a virtual circle 52 which indicates the range in which the air brush is sprayed thus adjusting the magnitude of the air brush.

The fourth manipulation example shown in Figs. 5A and 5B is an example which performs the deformation processing of the object. That is, two points inside a circular object 53 indicated by Fig. 5A are designated by the pointer 41 and the pointer 42 and they are pulled in the left and the right directions so as to deform the object 53 into a shape indicated by Fig. 5B.

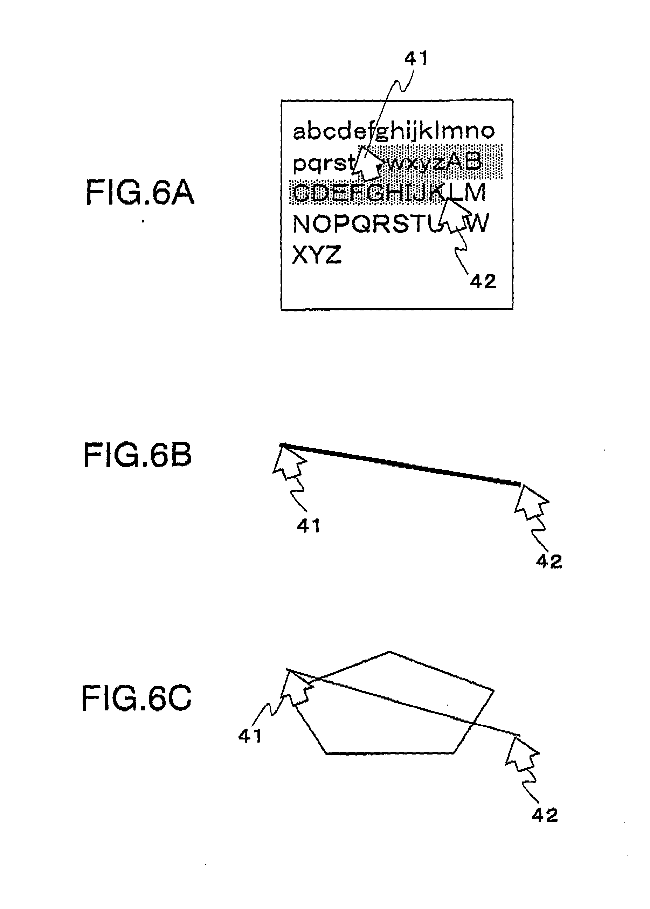

The fifth manipulation example shown in Figs. 6A to 6C is an example which designates a start point and an end point. That is, in an example in Fig. 6A, at the time of selecting the range of character string, the pointer 41 and the pointer 42 respectively designate a start point and an end point of the string. In an example in Fig. 6B, at the time of drawing a segment, the pointer 41 and the pointer 42 respectively designate a start point and an end point of the segment. In an example in Fig. 6C, at the time of cutting an object, the pointer 41 and the pointer 42 designates a start point and an end point of a cutting line.

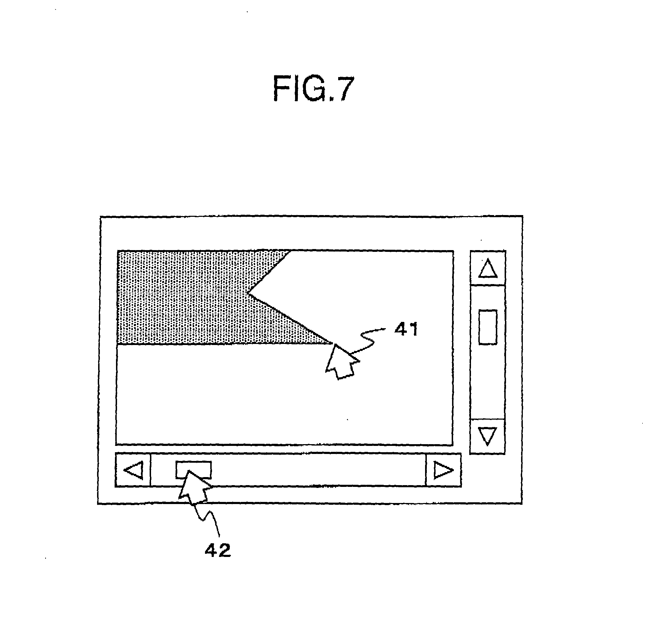

The sixth manipulation example shown in Fig. 7 is an example which performs other manipulation simultaneous with scrolling. That is, while the dragging manipulation is performed using the pointer 41, a scroll bar is manipulated using the pointer 42 so as to scroll a screen.

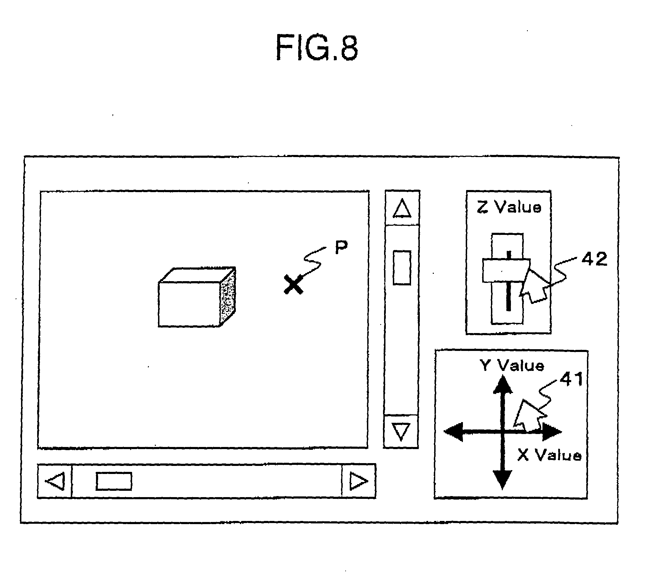

The seventh manipulation example shown in Fig. 8 is an example which designates a position in a three dimensional virtual space. That is, an X coordinate and a Y coordinate are determined using the pointer 41 on an X-Y plane and a Z coordinate is determined by manipulating a slide bar using the pointer 42. The position of a pointer P inside the virtual space is determined based on these coordinate values.

In any one of the above-mentioned manipulation examples, the user can efficiently perform the manipulation using both hands. This implies that the manipulation environment which approximates the real space can be obtained even in the virtual space on the computer. Accordingly, the operability of the user is enhanced. According to the present invention, the manipulation can be performed with the feeling which approximates the manipulation in the real space.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An electronic equipment which is used while being connected to a display device, said electronic equipment comprising;
a receiving part which receives input signals from N pieces (N ≧ 2 ) of pointing devices; and
a pointer control part which decides respective display positions of N pieces of pointers displayed on said display device based on input signals which said receiving part receives.

2. An electronic equipment which is used while being connected to a display device, said electronic equipment comprising:
a first receiving part which receives a first input signal from a first pointing device;
a second receiving part which receives a second input signal from a second pointing device;
a first pointer control part which decides a display position of a first pointer displayed on said display device based on said first input signal which said first receiving part receives; and
a second pointer control part which decides a display position of a second pointer displayed on said display device based on said second input signal which said second receiving part receives.

3. An electronic equipment according to claim 2, said electronic equipment further comprising:
a display content decision part which decides the display content of said display device in response to said first input signal, said second input signal, information indicative of the display position of said first pointer and information indicative of the display position of said second pointer.

4. A method for deciding the display position of a pointer, said method comprising the steps of:
receiving a first input signal from a first pointing device;
deciding the display position of a first pointer displayed on a display device based on said first input signal;
receiving a second input signal from a second pointing device; and
deciding the display position of a second pointer displayed on said display device based on said second input signal.

5. A storage medium for recording a program, which is executed on a computer, said program comprising the steps of:
receiving a first input signal from a first pointing device;
fixing a position of a first pointer, which is displayed onto a display device, by calculating said first input signal;
receiving a second input signal from a second pointing device; and
fixing a position of a second pointer, which is displayed onto a display device, by calculating said second input signal.

6. A program for making a computer execute following processing which comprises:
processing which receives a first input signal from a first pointing device and decides the display position of a first pointer displayed on a display device based on said first input signal; and
processing which receives a second input signal from a second pointing device and decides the display position of a second pointer displayed on said display device based on said second input signal.

7. An electronic equipment comprising:
a first connecting part for connecting said electronic equipment to a display device;
a second connecting part for connecting said electronic equipment to a first pointing device;
a third connecting part for connecting said electronic equipment to a second pointing device; and
a display control part which displays, when said display device is connected to said first connecting part, a first pointer which is displaced based on an instruction from said first pointing device which is connected to said second connecting part and a second pointer which is displaced based on an instruction from said second pointing device which is connected to said third connecting part on said display device.

8. An electronic equipment according to claim 7, said electronic equipment further comprising:
a processing part which specifies a position which becomes the reference or an object which becomes a subject on a display screen of said display device based on either one of said instructions of said first and second pointing devices, and decides the content of a manipulation to said position which becomes the reference or said object which becomes the subject based on the other instruction.
